# EUROPEAN PATENT APPLICATION

(11) **EP 4 417 344 A1**
(43) Date of publication of application: **21.08.2024**
(21) Application number: 22880866.3
(22) Date of filing: 04.10.2022
(51) Int. Cl.: B22F 1/00, B22F 1/05, B22F 1/14, B22F 10/14, B33Y 70/00, B33Y 70/10, B33Y 80/00, C22C 21/00, C22C 21/02, C22C 21/06, C22C 21/10, C22C 21/12

(54) **ALUMINUM POWDER MIXTURE, METAL ADDITIVE MANUFACTURING POWDER, AND ADDITIVELY MANUFACTURED METAL PRODUCT**

(30) Priority: 14.10.2021 JP 2021168725
(71) Applicant: Mitsubishi Materials Corporation, Tokyo 100-8117 (JP)
(72) Inventor: KATO, Jun, Saitama-shi, Saitama 330-8508 (JP); OHMORI, Shinichi, Saitama-shi, Saitama 330-8508 (JP); ORITO, Kenji, Saitama-shi, Saitama 330-8508 (JP)
(74) Representative: Hoffmann Eitle
(86) International application number: PCT/JP2022/037127
(87) International publication number: WO 2023/063170

(57) **Abstract**

This aluminum powder mixture is an aluminum powder mixture obtained by mixing two or more powders containing aluminum, in which an oxygen content of the aluminum powder mixture is 0.3 mass% or less, and a total content of one or more elements selected from Ca, Cu, Fe, Mg, Mn, Ni, Si, and Zn contained in the aluminum powder mixture is 0.4 mass% or more and 5.0 mass% or less.

## Description

### TECHNICAL FIELD

The present invention relates to an aluminum powder mixture, a metal powder for additive manufacturing, and a metal additive manufacturing product.

Priority is claimed on Japanese Patent Application No. 2021-168725, filed October 14, 2021, the content of which is incorporated herein by reference.

### BACKGROUND ART

Aluminum has been widely used as a material for heat exchangers such as heat sinks due to its characteristics such as light weight and high thermal conductive properties. However, there is a need to design and produce pins and fins having complicated shapes enabling more efficient heat exchange in order to further improve heat dissipation characteristics.

The powder metallurgy method, that is used as a method of producing a component having a complicated shape, can impart a shape at low cost since near net shaping using a mold is possible. However, in the application of the above method to aluminum, a problem has arisen in that sintering is not easily performed due to an oxide film in the related art. Therefore, methods for improving sinterability have been proposed, such as a method of pressure-forming a preform as described in Patent Document 1 and a method using a fine powder of several µm having excellent sinterability as described in Patent Document 2.

Meanwhile, in recent years, as one of additive manufacturing techniques using metal powders, a binder jetting has been attracting attention. For example, Patent Document 3 discloses a metal additive manufacturing method and a manufacturing device using the binder jetting. In this method, a binder containing a thermosetting resin, a thermoplastic resin, or a photocurable resin is selectively sprayed from a print head to a metal powder layer and repeatedly laminated to form a metal powder compact having a desired three-dimensional shape. Thereafter, a manufactured metal product having a three-dimensional shape is obtained through a binder solidification step, an unnecessary powder removing step, a degreasing step, and a sintering step. The binder jetting has the advantages of high accuracy, high productivity, and high recyclability of a raw material powder as compared to the existing powder bed fusion (PBF) method and directed energy deposition (DED) method.

### CITATION LIST

### [Patent Documents]

[Patent Document 1]
   Japanese Unexamined Patent Application, First Publication No. H01-294833
[Patent Document 2]
   Japanese Unexamined Patent Application, First Publication No. 2004-308004
[Patent Document 3]
   Published Japanese Translation No. 2020-511593 of the PCT International Publication

### SUMMARY OF INVENTION

### TECHNICAL PROBLEM

Since mold filling and pressure application are required in the method described in Patent Document 1, there was a problem in terms of productivity. In addition, in using a fine powder described in Patent Document 2, in a case where aluminum having a low specific gravity is used, a deterioration in quality and problems regarding safety are considered due to scattering during filling.

In the binder jetting disclosed in Patent Document 3, it is difficult to apply a high pressure that accompanies plastic deformation when a powder is laminated. Therefore, it is difficult to apply a sintering method used for die molding or metal injection molding in the related art as is. In addition, in the binder jetting, since powder lamination is repeatedly performed, the raw material powder is required to have stable fluidity and filling properties, and thus it is also difficult to apply a fine powder that is significantly affected by aggregation and scattering.

The present invention has been made in view of the above-described problems, and an object thereof is to provide an aluminum powder mixture, a metal powder for additive manufacturing, and a metal additive manufacturing product with which a high-density aluminum sintered body can be produced.

### SOLUTION TO PROBLEM

The present inventors have found that by using a pure aluminum powder or aluminum alloy powder mixture, each having different melting points, as a powder raw material, sinterability can be improved, and thus high densification with a relative density of 85% or more can be achieved even without pressurization. The reason for this is thought to be that by using the above-described pure aluminum powder or aluminum alloy powder mixture as a raw material, a trace amount of a melt can be locally generated during heating and sintering and sinterability is improved by liquid phase sintering.

The present invention includes the following aspects.
(1) An aluminum powder mixture of an aspect according to the present invention is an aluminum powder mixture obtained by mixing two or more powders containing aluminum and having different melting points, in which an oxygen content of the aluminum powder mixture is 0.3 mass% or less, and a total content of one or more elements selected from Ca, Cu, Fe, Mg, Mn, Ni, Si, and Zn contained in the aluminum powder mixture is 0.4 mass% or more and 5.0 mass% or less.

According to the aluminum powder mixture of aspect (1), an appropriate amount of a liquid phase can be generated from the aluminum powder having a low melting point by sintering. Therefore, it is possible to provide an aluminum powder mixture with which it is possible to produce a high-density aluminum sintered body in which the aluminum powders having a high melting point are integrated by the liquid phase generated between the particles of the aluminum powder having a high melting point. In addition, the influence of an oxide film generated on surfaces of the powder particles can be suppressed by reducing the oxygen content as described above, and thus it is possible to provide an aluminum powder mixture that is excellent in wettability of the liquid phase between the powder particles.

(2) In the aluminum powder mixture according to aspect (1), at least one of the powders constituting the aluminum powder mixture may be a pure aluminum powder (high-purity aluminum powder) having a purity of 99% or more.

In a case where at least one of the powders constituting the aluminum powder mixture is a pure aluminum powder, the conductivity and the thermal conductivity can be ensured at a high level in a case where a metal additive manufacturing product is made.

(3) In the aluminum powder mixture according to aspect (1) or (2), at least one of the powders constituting the aluminum powder mixture may be an aluminum alloy powder in which a total content of one or more elements selected from Ca, Cu, Fe, Mg, Mn, Ni, Si, and Zn as alloy components is 2.0 mass% or more and 25.0 mass% or less. The above range may be 2.0 mass% or more and 20.0 mass% or less.

In a case where at least one of the powders constituting the aluminum powder mixture contains one or more elements selected from Ca, Cu, Fe, Mg, Mn, Ni, Si, and Zn in an amount of 2.0 mass% or more and 25.0 mass% or less, it can be prepared as an aluminum powder having a low melting point, and thus it is possible to prepare an aluminum powder mixture including an aluminum powder having a high melting point and an aluminum powder having a low melting point. In a case where the total content of the above-described elements contained in the whole aluminum powder mixture is 0.4 mass% or more and 5.0 mass% or less, and the above-described aluminum powder having a low melting point in which the above-described elements are contained in an amount of 2.0 mass% or more and 25.0 mass% or less is included, it is possible to provide an aluminum powder mixture in which a suitable amount of a liquid phase can be generated during sintering when the aluminum alloy powder having a low melting point is contained in an appropriate amount relative to the total mass of the aluminum powder mixture. Accordingly, it is possible to provide an aluminum powder mixture with which a high-density aluminum sintered body or metal additive manufacturing product can be produced with the generation of a suitable amount of a liquid phase. In addition, by limiting the amount of the element to be added, that lowers the melting point to the above-described range, it is possible to provide an aluminum sintered body having excellent thermal conductive properties and electrical conductive properties.

(4) In the aluminum powder mixture according to any one of aspects (1) to (3), a difference MH - ML (°C) between a melting point ML (°C) of a pure aluminum powder or an aluminum alloy powder having a lowest melting point among the pure aluminum powder and the aluminum alloy powders constituting the aluminum powder mixture and a melting point MH (°C) of a pure aluminum powder or an aluminum alloy powder having a highest melting point may be 10°C or more and 100°C or less.

In a case where the difference between the melting point ML of the pure aluminum powder or an aluminum alloy powder having a lowest melting point and the melting point MH of the pure aluminum powder or an aluminum alloy powder having a highest melting point is 10°C or more and 100°C or less, it is possible to reliably generate a suitable amount of a liquid phase during sintering, and thus it is possible to provide an aluminum powder mixture with which a high-density aluminum sintered body can be produced with the generation of a suitable amount of a liquid phase.

(5) In the aluminum powder mixture according to any one of aspects (1) to (4), a volume-based 50%-cumulative particle size measured by a laser diffraction/scattering method may be 10 µm or more and 100 µm or less.

When the particle size is as described above, it is possible to provide an aluminum powder mixture that has stable fluidity and excellent sinterability and is suitable for applications such as an aluminum sintered body or a metal additive manufacturing product.

(6) In the aluminum powder mixture according to any one of aspects (1) to (5), Y = (D90 - D10)/D50, that is calculated from a volume-based 10%-cumulative particle size (D10), a volume-based 50%-cumulative particle size (D50), and a volume-based 90%-cumulative particle size (D90), measured by a laser diffraction/scattering method, may be in a range of 0.5 < Y < 2.0.

In a case where Y = (D90 - D10)/D50 is set to be in a range of 0.5 < Y < 2.0, the bulk density can be stably kept at a high level in the formation of a powder layer formed of the aluminum powder mixture. In a case where the value of Y is smaller than the above-described range, gaps between the powder particles increase, and it becomes difficult to obtain a high bulk density. In a case where the value of Y is larger than the above-described range, the sinterability of large powder particles decreases, which causes variations in density in a manufactured product obtained by sintering.

(7) A metal powder for additive manufacturing according to an aspect of the present invention includes the aluminum powder mixture according to any one of aspects (1) to (6).

The above-described aluminum powder mixture is excellent as a metal powder for additive manufacturing.

(8) A metal additive manufacturing product according to an aspect of the present invention includes the aluminum powder mixture according to any one of aspects (1) to (6). Specifically, the aluminum powder mixture is laminated into a desired three-dimensional shape by a powder bed method, a directed energy deposition method, an FDM method, a binder jetting, or the like and sintered at the same time or after the lamination to obtain a metal additive manufacturing product. In particular, additive manufacturing by a binder jetting is suitable for the present invention.

It is possible to provide a metal additive manufacturing product having a high relative density and excellent electrical conductive properties and thermal conductive properties when it is a metal additive manufacturing product formed from the above-described aluminum powder mixture.

### ADVANTAGEOUS EFFECTS OF INVENTION

According to an aluminum powder mixture according to an aspect of the present invention, it is possible to further promote the sintering between two or more powders having different melting points as compared to powders of the related art, and as a result, an aluminum sintered body to be obtained can obtain a high density and high electrical conductive properties and thermal conductive properties. Therefore, for example, it is possible to further improve the performance of metal additive manufacturing products such as heat exchange members, conductive members, and strength members prepared by using the aluminum powder mixture.

### BRIEF DESCRIPTION OF DRAWINGS

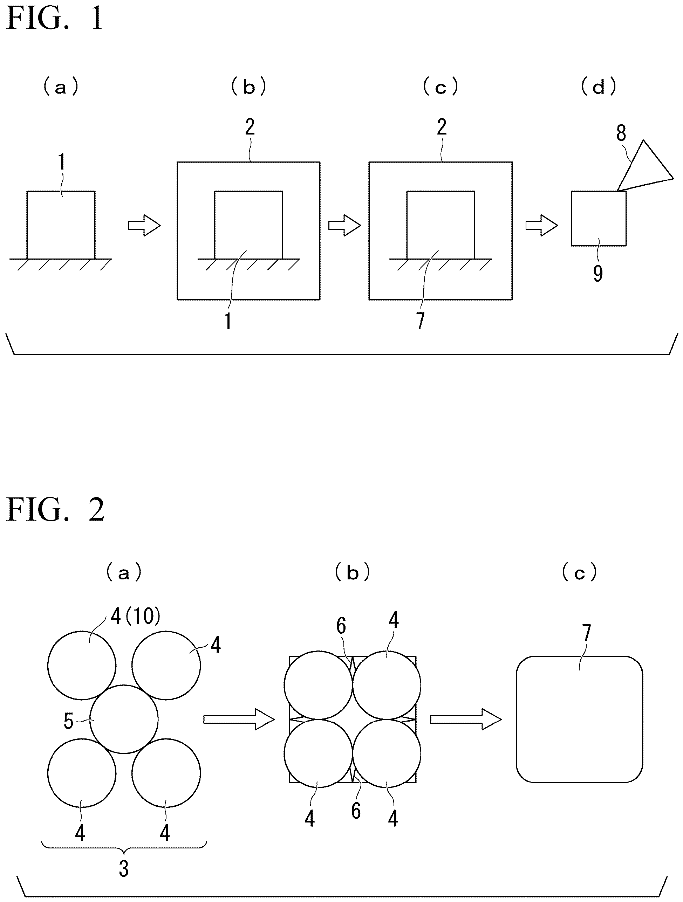

FIG. 1 shows an example of an aluminum powder mixture according to a first embodiment and a sintering process thereof. FIG. 1(a) is a partially enlarged cross-sectional view showing an aluminum powder mixture laminate, FIG. 1(b) is an explanatory view showing a state in which the laminate is sintered in a heating furnace, FIG. 1(c) is an explanatory view showing an outline of an obtained sintered body, and FIG. 1(d) is an explanatory view showing a state in which the sintered body is subjected to final processing.
FIG. 2 shows an example of a process of sintering the aluminum powder mixture. FIG. 2(a) is an explanatory view showing the aluminum powder mixture before sintering, FIG. 2(b) is an explanatory view showing a state in which a liquid phase wet-spreads during the sintering, and FIG. 2(c) is an explanatory view showing a state in which the powders are integrated after the sintering and form a sintered body.

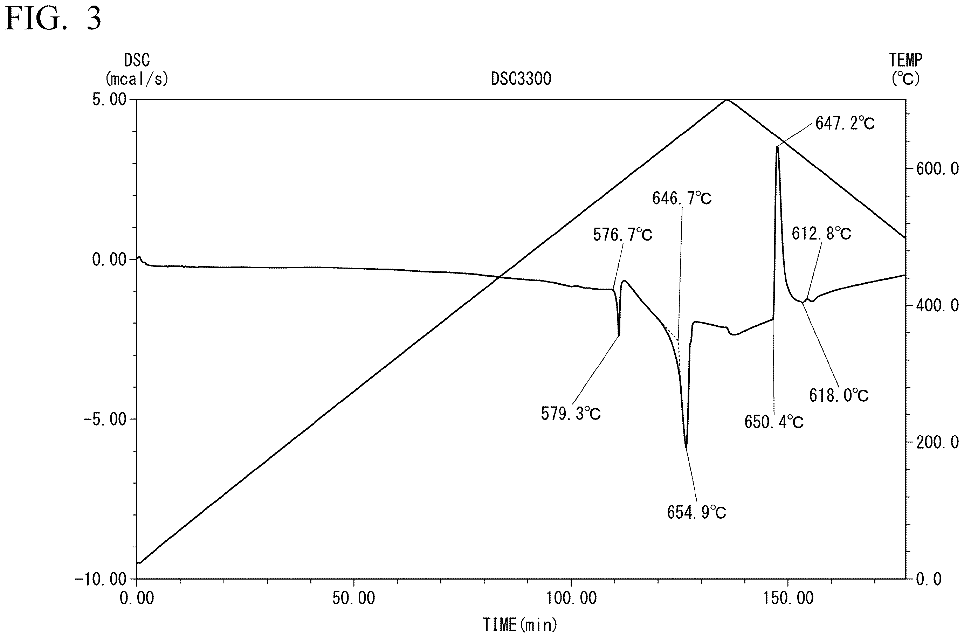

FIG. 3 is a graph showing DSC measurement results of an Al-10% Al10Si0.5Mg mixed powder.

### DESCRIPTION OF EMBODIMENTS

Hereinafter, the present invention will be described in detail, but is not limited to embodiments described below.

An aluminum powder mixture according to the present embodiment is, for example, (1) an aluminum powder mixture obtained by mixing a total of two or more powders, including a pure aluminum powder and at least one aluminum alloy powder, or (2) an aluminum powder mixture obtained by mixing two or more aluminum alloy powders having different melting points.

In any one of (1) and (2), the aluminum alloy powder contains one or more elements selected from Ca, Cu, Fe, Mg, Mn, Ni, Si, and Zn as alloy components, and a remainder consisting of inevitable impurities and aluminum.

A total content of the elements (alloy components) contained in at least one aluminum powder constituting the aluminum powder mixture is preferably 2.0 mass% or more and 25.0 mass% or less in each aluminum alloy powder.

In addition, a total content of one or more elements selected from Ca, Cu, Fe, Mg, Mn, Ni, Si, and Zn contained in the aluminum powder mixture is 0.4 mass% or more and 5.0 mass% or less with respect to the total mass of the aluminum powder mixture according to the present embodiment.

In the present embodiment, the aluminum powder mixture can be defined as a mixture of a first powder and a second powder for the sake of convenience.

The first powder is a powder consisting of an aluminum alloy containing one or more elements selected from Ca, Cu, Fe, Mg, Mn, Ni, Si, and Zn as alloy components, and a remainder consisting of inevitable impurities and aluminum.

The second powder consists of a pure aluminum powder (high-purity aluminum powder) as a first example. In a case where the aluminum powder mixture includes a pure aluminum powder, the content of the pure aluminum powder is preferably 70 mass% or more with respect to the total mass of the aluminum powder mixture.

The second powder can be defined as a powder consisting of an aluminum alloy powder and having a higher melting point than the first powder as a second example.

The aluminum powder mixture of this embodiment can be used as a metal powder for additive manufacturing as described below.

The reason why it is preferable that "one or more elements selected from Ca, Cu, Fe, Mg, Mn, Ni, Si, and Zn be contained in an amount of 2.0 mass% or more and 25.0 mass% or less as alloy components in the aluminum alloy powder" is as follows.

All of the elements are elements capable of forming a eutectic crystal with aluminum. When the elements are added to aluminum as alloy elements, it is possible to reduce the melting point of the aluminum alloy powder and partially generate a liquid phase.

When the amount of one or more elements selected from Ca, Cu, Fe, Mg, Mn, Ni, Si, and Zn is less than 2.0 mass%, the amount of the liquid phase generated when heating is performed to a temperature equal to or higher than the melting point of the aluminum alloy powder constituting the aluminum powder mixture is not sufficient, densification via the liquid phase is not sufficient, and the relative density when a sintered body is made decreases.

When the amount of one or more elements selected from Ca, Cu, Fe, Mg, Mn, Ni, Si, and Zn is more than 25.0 mass%, the additive elements are present to exceed the composition of a eutectic crystal. Accordingly, the amount of the liquid phase generated when heating is performed to a temperature equal to or higher than the melting point of the aluminum alloy powder constituting the aluminum powder mixture is not sufficient, densification via the liquid phase is not sufficient, and the relative density when a sintered body is made decreases.

The reason why "the total content of one or more elements selected from Ca, Cu, Fe, Mg, Mn, Ni, Si, and Zn in the aluminum powder mixture be 0.4 mass% or more and 5.0 mass% or less" is as follows.

As described above, all of the elements are elements capable of forming a eutectic crystal with aluminum, and it is possible to reduce the melting point when the elements are contained as alloy elements in the aluminum alloy powder, so that a liquid phase can be partially generated.

The generated liquid phase spreads to particle boundaries of the surrounding pure aluminum powder or aluminum alloy powder having a high melting point in an unmelted state, and thus can promote sintering.

When these elements are in an amount of less than 0.4 mass% in the aluminum powder mixture, the liquid phase is not sufficiently generated, and thus no improvement in sinterability can be expected for the aluminum powder mixture. Meanwhile, since an increase of the additive elements leads to decreases in thermal conductivity and electrical conductivity of a manufactured product to be finally obtained, it is not preferable that the elements be added in an amount of more than 5.0 mass%.

Regarding the pure aluminum powder or aluminum alloy powder constituting the aluminum powder mixture, a volume-based 50%-cumulative particle size (D50) is preferably 10 µm or more and 100 µm or less.

When the volume-based 50%-cumulative particle size is 10 µm or more and 100 µm or less regarding the pure aluminum powder or aluminum alloy powder, it is possible to obtain a powder mixture having stable fluidity and excellent sinterability. In a case where the powder particle size (D50) is 10 µm or less, there is a risk of a dust explosion due to a decrease in fluidity and scattering of the powder. In a case where the powder particle size (D50) is more than 100 µm, the specific surface area of the powder particles decreases. Therefore, the sinterability of the aluminum powder mixture decreases and a sufficient density of a sintered body cannot be reached.

Y = (D90 - D10)/D50, that is calculated from a volume-based 10%-cumulative particle size (D10), a volume-based 50%-cumulative particle size (D50), and a volume-based 90%-cumulative particle size (D90), is preferably in a range of 0.5 < Y < 2.0.

When Y = (D90 - D10)/D50 is in the range of 0.5 < Y < 2.0, the bulk density of the aluminum powder mixture can be stably kept at a high level.

In a case where Y is 0.5 or less, the particle size distribution range is extremely narrow. Therefore, the powder mixture has excellent stability, but the gap between particles increases and it becomes difficult to obtain a high bulk density.

In a case where Y is 2.0 or more, there is an advantage in that small particles enter between large particles, and thus a high bulk density can be easily obtained. However, there is a concern that variations may be caused in density in a manufactured product due to problems such as scattering of fine particles and low sinterability of large particles.

The reason why "it is preferable that the oxygen content be 0.3 mass% or less" is as follows.

In a case where the oxygen content of the aluminum powder mixture is within a range of 0.3 mass% or less, the wettability of the liquid phase generated when the aluminum powder mixture is heated can be stably improved between powder particles, and thus it is possible to suppress the segregation and aggregation of the liquid phase.

In a case where the oxygen content is more than 0.3 mass%, there is a concern that the wettability of the solid phase and the liquid phase may be reduced, the liquid phase may segregate and solidify as is, and thus appearance defects and non-uniformity in density of a sintered body may occur.

In order to suppress the oxygen content of the aluminum powder mixture to 0.3 mass% or less, the aluminum powder or aluminum alloy powder constituting the aluminum powder mixture is washed with an acidic or alkaline solution and dried in advance, for example, and thus the oxygen content can be suppressed. In addition, in order to suppress a reaction with atmospheric moisture in the process, it is desirable that the aluminum powder be stored and mixed in a low humidity environment such as a dry room or a glove box.

The oxygen content of the aluminum powder mixture is more preferably 0.25 mass% or less, and even more preferably 0.20 mass% or less.

### "Method of Producing Aluminum Powder Sintered Body"

In order to produce an aluminum powder sintered body using the above-described aluminum powder mixture, first, a method in which the aluminum powder mixture is used as a raw material powder (metal powder for additive manufacturing) and fills a mold having a predetermined shape, or an additive manufacturing method such as a powder bed method, a directed energy deposition method, an FDM method, or a binder jetting can be used, and a binder jet type additive manufacturing method is particularly preferable. In the binder jet type additive manufacturing method, a method in which a binder containing a thermosetting resin, a thermoplastic resin, or a photocurable resin is selectively sprayed to the raw material powder and laminated repeatedly can be used.

The pure aluminum powder for constituting the aluminum powder mixture can be produced by a method such as a nitrogen gas atomizing method, for example. The aluminum alloy powder for constituting the aluminum powder mixture can be produced by a nitrogen gas atomizing method, for example.

In a case where the powder mixture is laminated to obtain a shape, the shape can be realized by performing selective binder spraying using the raw material powder and repeatedly performing the lamination. Due to the repeated lamination, the raw material powder is fixed to have a shape that matches the desired three-dimensional shape. Specifically, first, a recoater spreads a thin layer of the raw material powder on a build plate to form a bed. Next, an ink jet nozzle selectively ejects a liquid binder according to the shape of a cross section of a model while passing over the bed. When one layer is completed, the build plate is lowered one step and the recoater spreads a new bed. The binder is ejected onto the newly spread bed according to the shape of the cross section of the model. This process is repeated until a manufactured product is completed. After the manufactured product is completed and the raw material powder is fixed, the unnecessary powder is removed or degreasing is performed as necessary to obtain, for example, a cube-shaped green body 1 shown in FIG. 1(a).

When the green body 1 is obtained, the green body 1 is accommodated in a heating furnace 2 as shown in FIG. 1(b) and heated for a required time to a temperature of about 560°C to 650°C in a vacuum atmosphere, a reducing atmosphere, or an inert gas without pressurization, thereby being sintered. By heating to a temperature in the above range, a liquid phase is generated from the aluminum alloy powder added to and mixed with the raw material powder and having a low melting point, and wet-spreads to fill the gaps between the particles of the raw material powder having a high melting point, so that isotropic shrinkage can be obtained and the density can be increased.

In that case, regarding the rate of temperature increase, it is desirable that, in order to suppress the rapid generation of the liquid phase, heating be performed at a rate of temperature increase of 10 °C/min or less in a temperature range of 500°C or higher at which the generation of the liquid phase starts.

In addition, in order to further stabilize the wet spread of the liquid phase between the powder particles, the heating step may be performed in two or more stages to promote the sintering of a solid phase by maintaining the temperature at equal to or lower than the temperature at which the liquid phase is generated, and to thereby stabilize the gaps between the particles.

FIG. 2 shows, as an example of modeling of an aluminum powder mixture 3, a powder mixture having a pure aluminum powder 4 and a first aluminum alloy powder 5 having a lower melting point than the pure aluminum powder 4. For showing through modeling, FIG. 2 shows the aluminum powder mixture 3 including four pure aluminum powders 4 and one first aluminum alloy powder 5. However, the number of pure aluminum powders 4 and the number of first aluminum alloy powders 5 may be optional as long as the above-described percentages by mass are achieved.

FIG. 2 is an explanatory view for showing a case where the aluminum powder mixture 3 is heated to a temperature of about 560°C to 650°C through modeling. In the example shown in FIG. 2, the aluminum alloy powder 5 can be referred to as a first powder, and the pure aluminum powder 4 can be referred to as a second powder.

Pure aluminum has a melting point of about 660°C. In addition, when the above-described eutectic alloy elements (one or more selected from Ca, Cu, Fe, Mg, Mn, Ni, Si, and Zn) are added to pure aluminum, an aluminum alloy powder having a melting point lower than the melting point of the pure aluminum of about 660°C is obtained. In addition, the ratio at which the melting point falls below the melting point of the pure aluminum varies depending on the amount of the eutectic elements to be added to the aluminum and varies depending on the kinds of the eutectic elements to be added.

In the aluminum powder mixture 3, a difference MH - ML (°C) between a melting point ML (°C) of a pure aluminum powder having a lowest melting point or an aluminum alloy powder 5 having a lowest melting point among the pure aluminum powder (second powder) 4 and the first aluminum alloy powder (first powder) 5 and a melting point MH (°C) of a pure aluminum powder having a highest melting point or an aluminum alloy powder having a highest melting point is preferably 10°C or more and 100°C or less.

In the aluminum powder mixture 3, in a case where the pure aluminum powder is used as the second powder, it is desirable that the purity be 99% or more. Accordingly, it is possible to suppress a change of the melting point of the pure aluminum powder due to impurity elements, the melting point difference from the aluminum alloy powder (first powder) can be stably ensured, and thus it is possible to expect stable densification of a sintered body.

In addition, as another example of the aluminum powder mixture 3, a powder mixture of a pure aluminum powder 4, a first aluminum alloy powder 5 having a lower melting point than the pure aluminum powder 4, and a second aluminum alloy powder 10 having a lower melting point than the first aluminum alloy powder 5 can also be selected. FIG. 2(a) also shows an example of the aluminum powder mixture 3 in a case where one of the above-described four pure aluminum powders 4 is replaced with the second aluminum alloy powder 10 as indicated by a reference numeral (10).

Here, for example, it is possible to use aluminum alloy powders 5 and 10 having a melting point in a range of 560°C to 640°C relative to the melting point of the pure aluminum powder 4 of 660°C.

In this example, the aluminum alloy powders 5 and 10 can be referred to as a first powder, and the pure aluminum powder 4 can be referred to as a second powder.

In FIG. 2(a), in order to simplify the illustration, a model configuration is shown in a case in which the aluminum powder mixture 3 is constituted by mixing the pure aluminum powder 4, the first aluminum alloy powder 5, and the second aluminum alloy powder 10 at a ratio of 3:1:1.

The aluminum powder mixture 3 can also be constituted of the first aluminum alloy powder 5 and the second aluminum alloy powder 10 with the omission of all the pure aluminum powders 4 shown in FIG. 2(a). Alternatively, a plurality of aluminum alloy powders having different melting points may be further prepared and mixed in a required amount.

As described above, as the aluminum powder mixture 3, it is possible to select any of: an aluminum powder mixture obtained by mixing a total of two or more powders, i.e., the pure aluminum powder 4 and one or more aluminum alloy powders having different compositions; and an aluminum powder mixture obtained by mixing two or more aluminum alloy powders having different compositions.

In a case where the aluminum powder mixture 3 is constituted of the first aluminum alloy powder 5 and the second aluminum alloy powder 10 with the omission of the pure aluminum powder 4, the first aluminum alloy powder 5 can be referred to as a first powder, and the second aluminum alloy powder 10 can be referred to as a second powder.

The first powder may be a mixed powder of a plurality of aluminum alloy powders that have different compositions to have a plurality of melting points, and the second powder may also be a mixed powder of a plurality of aluminum alloy powders that have different compositions to have a plurality of melting points.

In a case where a plurality of aluminum alloy powders are used as the first powder and a plurality of aluminum alloy powders are used as the second powder, a difference MH - ML (°C) between a melting point ML (°C) of an aluminum alloy powder having a lowest melting point among the aluminum alloy powders and a melting point MH (°C) of an aluminum alloy powder having a highest melting point is preferably 10°C or more and 100°C or less.

In a case where the aluminum powder mixture 3 shown in FIG. 2(a) is heated to the above-described temperature, a liquid phase 6 is generated from the aluminum alloy powder 5 having a low melting point. The liquid phase 6 wet-spreads to gaps between the pure aluminum powders 4 present around the liquid phase as shown in FIG. 2(b).

Since the pure aluminum powder 4 has a melting point of about 660°C, the pure aluminum powder 4 is not completely melted by heating in the above-described temperature range, but some of the parts that are interfaces between the pure aluminum powders 4 where the liquid phase 6 wet-spreads are melted and fused together. Therefore, when cooling is performed after heating for a predetermined time, a dense sintered body 7 can be finally obtained in which all the powders are substantially melted and integrated as shown in FIG. 2(c). FIG. 1(c) shows a state in which the sintered body 7 is produced in the heating furnace 2.

The obtained sintered body 7 can be finished by being processed or surface-polished with a cutting tool 8 as needed as shown in FIG. 1(d), to obtain a product sintered body (additively manufactured product) 9.

In a case where the aluminum powder mixture 3 also includes the aluminum alloy powder 10, a liquid phase 6 is generated from both the aluminum alloy powder 5 and the aluminum alloy powder 10. The liquid phase 6 wet-spreads to gaps between the pure aluminum powders 4 present around the liquid phase.

In the sintered body 7 or the product sintered body 9, the oxygen content in the aluminum powder mixture is 0.3 mass% or less, and the above-described specific element content in the aluminum powder mixture is 0.4 mass% or more and 5.0 mass% or less. In addition, the sintered body 7 or the product sintered body 9 is produced by sintering the aluminum powder mixture 3 including the pure aluminum powder 4 and the aluminum alloy powder 5 in which the above-described specific element content is 2.0 mass% or more and 20.0 mass% or less. Accordingly, the sintered body 7 or the product sintered body 9 has a dense structure in which the liquid phase generated from the aluminum alloy powder 5 effectively fills gaps between the pure aluminum powders 4 having a high melting point.

Therefore, it is possible to obtain a sintered body 7 or a product sintered body 9 having a high density and a shape that is close to a target shape and well-regulated. For example, it is possible to obtain a sintered body 7 or a product sintered body 9 made of aluminum having a relative density of 85% or more and a conductivity of 40% IACS or more.

In the aluminum powder mixture 3 in which the aluminum alloy powder 5 is contained in the above-described range relative to the pure aluminum powder 4, since the melting point falls within an appropriate range relative to the pure aluminum, a liquid phase 6 can be generated effectively in a desired amount in a case where heating to the above-described temperature range is performed and sintering is then performed. In addition, since the amount of the oxygen contained in the aluminum alloy powder is 0.3 mass% or less, the wet spread of the liquid phase 6 can be sufficiently ensured, and thus it is possible to obtain a sintered body 7 or a product sintered body 9 in which there are no appearance defects and no non-uniformity in density due to the segregation and aggregation of the liquid phase.

In the above-described aluminum powder mixture 3, it is possible to further promote the sintering of the pure aluminum powder 4 with respect to the pure aluminum powder 4. As a result, an aluminum sintered body to be obtained can obtain a high density and high electrical conductive properties and thermal conductive properties.

Due to the reasons, for example, it is possible to further improve the performance of heat exchange members, conductive members, and strength members prepared by using the above-described aluminum powder mixture.

In addition, the sintered body 7 or the product sintered body 9 made of aluminum may be subjected to a surface treatment such as polishing, anodizing, or plating according to the purpose.

### EXAMPLES

Next, the effects of the present invention will be demonstrated with examples.

A necessary amount of pure aluminum and a necessary amount of an aluminum master alloy were added according to a target composition and put into a melting furnace to produce melts of the pure aluminum and the aluminum alloy, and from the melts, a pure aluminum powder and an aluminum alloy powder were prepared by an inert gas atomizing method.

From the obtained pure aluminum powder and aluminum alloy powder, coarse powders and fine powders consisting of fume or the like were removed by sieving or washing, and the obtained pure aluminum powder and aluminum alloy powder were sieved according to a target particle size as necessary. Then, the pure aluminum powder (purity: 99% or more) and the aluminum alloy powder were mixed at a mixing ratio shown in Table 1 to obtain an aluminum powder mixture. The case where the mixing ratio of the alloy powder in the aluminum powder mixture shown in Table 1 is 10% means that the remaining 90% is the pure aluminum powder. Table 2 shows compositions of all the aluminum powder mixtures.

In addition, a low-melting point aluminum alloy powder and a high-melting point aluminum alloy powder (Al-3 mass% Si powder) having compositions shown in Table 4 were mixed to obtain an aluminum powder mixture. The case where the mixing ratio of the low-melting point alloy powder in the aluminum powder mixture shown in Table 4 is 10% means that the remaining 90% is the high-melting point aluminum alloy powder.

Using the aluminum mixed powders shown in Tables 1 to 4, shapes of 50 mm in length × 20 mm in width × 1.5 mm in thickness were manufactured with the use of a metal binder jet type additive manufacturing device (trade name: DM-P2500, manufactured by Digital Metal), and then the resins were cured in an inert atmosphere or an air atmosphere and subjected to heating and degreasing to remove the binder. Then, the obtained degreased bodies were heated to 565°C to 650°C in a vacuum atmosphere or an inert atmosphere to prepare sintered bodies.

Methods of measuring physical property values are shown below.

### "Measurement of Particle Size Distribution"

The particle size distributions of the pure aluminum powder and the aluminum alloy powder were measured by a wet method using trade name: MT3300EXII (laser diffraction/scattering particle size distribution measurement device) manufactured by MicrotracBEL Corp., and from the obtained results, a volume-based 10%-frequency cumulative diameter D10, a volume-based 50%-frequency cumulative diameter D50, and a volume-based 90%-frequency cumulative diameter D90 were calculated.

### "Manufactured Product Density"

The bulk densities of the obtained manufactured products were measured based on the methods of measuring the density and specific gravity of a solid specified in JIS Z 8807, and the true density of the manufactured product was measured by a pycnometer method. The relative density (= bulk density/true density) of the manufactured product was calculated from the obtained bulk density and true density.

### "Alloy Element Mass Ratio"

The mass ratios of Ca, Cu, Fe, Mg, Mn, Ni, Si, and Zn contained in the aluminum powder, aluminum alloy powder, and aluminum powder mixture were measured by using an inductively coupled plasma emission spectrometer.

### "Oxygen Concentration"

The oxygen concentration in the aluminum powder mixture was measured by using an inert gas melting-infrared absorption method.

### "Conductivity"

Test pieces of 10 mm in width x 30 mm in length were cut out from the obtained sintered bodies, and the electrical resistance was obtained by a four-terminal method. In addition, dimensions of the test pieces were measured by using a micrometer and cross sectional areas of the test pieces were calculated. Then, conductivities were calculated from the measured electrical resistance values and cross sectional areas.

### "Melting Point Difference"

An apex of the endothermic peak generated due to the melting of the aluminum powder mixture in heating from room temperature to 700°C in an argon gas atmosphere using a differential scanning calorimeter (DSC) was defined as a melting point, and a difference MH - ML (°C) between a melting point ML (°C) of an aluminum powder or an aluminum alloy powder having a lowest melting point and a melting point MH (°C) of an aluminum powder or an aluminum alloy powder having a highest melting point was calculated.

FIG. 3 shows DSC measurement results of an Al-10% Al10Si0.5Mg mixed powder (90% pure Al-10% (Al-10Si-0.5Mg) mixed powder). The Al-10% Al10Si0.5Mg mixed powder is a powder mixture obtained by mixing 10 mass% of an Al-10Si-0.5Mg powder with 90 mass% of a pure aluminum powder.

As shown in FIG. 3, the melting peak of the AlSi10Mg0.5 powder is shown at 579.3°C, and the melting peak of the pure aluminum can be observed at 654.9°C. The value of MH-ML (°C) can be calculated from the comparison between these melting peak temperatures.

The above measurement results are collectively listed in Tables 1 to 6.

**TABLE 1**

| | | Composition of Alloy Powder in Aluminum Powder Mixture (mass%) | | | | | | | | | Total Additive Element Content (mass%) | Mixing Ratio of Alloy Powder in Aluminum Powder Mixture |
|---|---|---|---|---|---|---|---|---|---|---|---|---|
| | | Al | Ca | Cu | Fe | Mg | Mn | Ni | Si | Zn | | |
| Examples | 1 | Bal. | 0.0 | 0.0 | 0.1 | 0.5 | 0.0 | 0.0 | 10.0 | 0.0 | 10.6 | 10% |
| | 2 | Bal. | 0.0 | 0.0 | 0.1 | 0.5 | 0.0 | 0.0 | 10.0 | 0.0 | 10.6 | 20% |
| | 3 | Bal. | 0.0 | 0.0 | 0.1 | 0.5 | 0.0 | 0.0 | 10.0 | 0.0 | 10.6 | 40% |
| | 4 | Bal. | 0.0 | 0.0 | 0.0 | 0.6 | 0.0 | 0.0 | 3.0 | 0.0 | 3.6 | 10% |
| | 5 | Bal. | 0.0 | 0.0 | 0.1 | 0.0 | 0.0 | 0.0 | 12.0 | 0.0 | 12.1 | 20% |
| | 6 | Bal. | 0.0 | 0.0 | 0.2 | 0.0 | 0.0 | 0.0 | 20.1 | 0.0 | 20.3 | 23% |
| | 7 | Bal. | 0.0 | 0.0 | 0.0 | 0.0 | 0.0 | 0.0 | 3.0 | 0.0 | 3.0 | 10% |
| | 8 | Bal. | 0.0 | 0.0 | 0.0 | 0.6 | 0.0 | 0.0 | 3.0 | 0.0 | 3.6 | 10% |
| | 9 | Bal. | 0.0 | 6.0 | 0.7 | 0.0 | 0.0 | 0.0 | 0.0 | 0.3 | 7.0 | 20% |
| | 10 | Bal. | 0.0 | 4.0 | 0.7 | 0.6 | 0.7 | 0.0 | 0.6 | 0.3 | 6.9 | 20% |
| | 11 | Bal. | 0.0 | 0.2 | 0.7 | 1.3 | 1.5 | 0.0 | 0.6 | 0.3 | 4.6 | 20% |
| | 12 | Bal. | 0.0 | 0.3 | 0.8 | 0.1 | 0.1 | 0.0 | 6.0 | 0.1 | 7.3 | 20% |
| | 13 | Bal. | 0.0 | 0.1 | 0.4 | 2.6 | 0.0 | 0.0 | 0.3 | 0.1 | 3.5 | 20% |
| | 14 | Bal. | 0.0 | 0.1 | 0.4 | 4.5 | 0.2 | 0.0 | 0.3 | 0.3 | 5.8 | 20% |
| | 15 | Bal. | 0.0 | 0.1 | 0.5 | 0.8 | 0.0 | 0.0 | 0.7 | 0.1 | 2.2 | 20% |
| | 16 | Bal. | 0.0 | 0.1 | 0.4 | 0.9 | 0.1 | 0.0 | 0.8 | 0.1 | 2.4 | 20% |
| | 17 | Bal. | 2.6 | 0.0 | 0.0 | 0.0 | 0.0 | 0.0 | 0.0 | 0.0 | 2.6 | 50% |
| | 18 | Bal. | 2.0 | 0.0 | 0.0 | 0.0 | 0.0 | 0.0 | 0.0 | 0.0 | 2.0 | 50% |
| Comparative Examples | 1 | Bal. | 0.0 | 0.0 | 0.0 | 0.0 | 0.0 | 0.0 | 1.5 | 0.0 | 1.5 | 10% |
| | 2 | Bal. | 0.0 | 0.0 | 0.2 | 0.0 | 0.0 | 0.0 | 25.0 | 0.0 | 25.2 | 20% |
| | 3 | Bal. | 0.0 | 0.0 | 0.1 | 0.5 | 0.0 | 0.0 | 10.0 | 0.0 | 10.6 | 10% |

**TABLE 2**

| | | Overall Composition of Aluminum Powder Mixture (mass%) | | | | | | | | | Total Additive Element Content (mass%) | Oxygen Content (mass%) |
|---|---|---|---|---|---|---|---|---|---|---|---|---|
| | | Al | Ca | Cu | Fe | Mg | Mn | Ni | Si | Zn | | |
| Examples | 1 | Bal. | 0.0 | 0.0 | 0.1 | 0.1 | 0.0 | 0.0 | 1.0 | 0.0 | 1.2 | 0.17 |
| | 2 | Bal. | 0.0 | 0.0 | 0.1 | 0.1 | 0.0 | 0.0 | 2.0 | 0.0 | 2.3 | 0.20 |
| | 3 | Bal. | 0.0 | 0.0 | 0.1 | 0.2 | 0.0 | 0.0 | 4.0 | 0.0 | 4.3 | 0.15 |
| | 4 | Bal. | 0.0 | 0.0 | 0.1 | 0.1 | 0.0 | 0.0 | 0.3 | 0.0 | 0.5 | 0.18 |
| | 5 | Bal. | 0.0 | 0.0 | 0.1 | 0.0 | 0.0 | 0.0 | 2.4 | 0.0 | 2.6 | 0.18 |
| | 6 | Bal. | 0.0 | 0.0 | 0.1 | 0.0 | 0.0 | 0.0 | 4.5 | 0.0 | 4.8 | 0.17 |
| | 7 | Bal. | 0.0 | 0.0 | 0.1 | 0.0 | 0.0 | 0.0 | 0.3 | 0.0 | 0.4 | 0.16 |
| | 8 | Bal. | 0.0 | 0.0 | 0.1 | 0.1 | 0.0 | 0.0 | 0.3 | 0.0 | 0.5 | 0.14 |
| | 9 | Bal. | 0.0 | 1.2 | 0.2 | 0.0 | 0.0 | 0.0 | 0.0 | 0.1 | 1.5 | 0.22 |
| | 10 | Bal. | 0.0 | 0.8 | 0.2 | 0.1 | 0.2 | 0.0 | 0.1 | 0.1 | 1.5 | 0.11 |
| | 11 | Bal. | 0.0 | 0.0 | 0.2 | 0.3 | 0.3 | 0.0 | 0.1 | 0.1 | 1.0 | 0.23 |
| | 12 | Bal. | 0.0 | 0.1 | 0.2 | 0.0 | 0.0 | 0.0 | 1.2 | 0.0 | 1.6 | 0.12 |
| | 13 | Bal. | 0.0 | 0.0 | 0.1 | 0.5 | 0.0 | 0.0 | 0.1 | 0.0 | 0.8 | 0.14 |
| | 14 | Bal. | 0.0 | 0.0 | 0.1 | 0.9 | 0.1 | 0.0 | 0.1 | 0.1 | 1.3 | 0.19 |
| | 15 | Bal. | 0.0 | 0.0 | 0.2 | 0.2 | 0.0 | 0.0 | 0.2 | 0.0 | 0.6 | 0.10 |
| | 16 | Bal. | 0.0 | 0.0 | 0.1 | 0.2 | 0.0 | 0.0 | 0.2 | 0.0 | 0.6 | 0.17 |
| | 17 | Bal. | 1.3 | 0.0 | 0.0 | 0.0 | 0.0 | 0.0 | 0.0 | 0.0 | 1.4 | 0.17 |
| | 18 | Bal. | 1.0 | 0.0 | 0.0 | 0.0 | 0.0 | 0.0 | 0.0 | 0.0 | 1.1 | 0.13 |
| Comparative Examples | 1 | Bal. | 0.0 | 0.0 | 0.1 | 0.0 | 0.0 | 0.0 | 0.2 | 0.0 | 0.3 | 0.12 |
| | 2 | Bal. | 0.0 | 0.0 | 0.2 | 0.0 | 0.0 | 0.0 | 5.0 | 0.0 | 5.2 | 0.16 |
| | 3 | Bal. | 0.0 | 0.0 | 0.1 | 0.1 | 0.0 | 0.0 | 1.0 | 0.0 | 1.2 | 0.35 |

**TABLE 3**

| | | Melting Point Difference | Particle Size Distribution | (D90 - D10) /D50 | Sintering Conditions | Sintered Body Evaluation | Conductivity (% IACS) |
|---|---|---|---|---|---|---|---|
| | | | D50 | | Sintering Temperature (°C) | Relative Density | |
| Examples | 1 | 76 | 31 | 1.1 | 620 | 96% | 54 |
| | 2 | 76 | 28 | 0.9 | 620 | 94% | 49 |
| | 3 | 76 | 24 | 1.2 | 620 | 93% | 41 |
| | 4 | 77 | 15 | 1.2 | 620 | 93% | 49 |
| | 5 | 77 | 39 | 0.9 | 620 | 96% | 51 |
| | 6 | 78 | 37 | 1.2 | 620 | 89% | 48 |
| | 7 | 67 | 27 | 1.0 | 620 | 97% | 56 |
| | 8 | 69 | 33 | 0.9 | 620 | 94% | 51 |
| | 9 | 100 | 24 | 0.9 | 600 | 91% | 45 |
| | 10 | 97 | 28 | 1.0 | 610 | 93% | 48 |
| | 11 | 10 | 26 | 1.0 | 650 | 90% | 45 |
| | 12 | 13 | 18 | 1.2 | 650 | 92% | 47 |
| | 13 | 49 | 20 | 1.0 | 630 | 93% | 49 |
| | 14 | 55 | 30 | 1.0 | 630 | 96% | 54 |
| | 15 | 62 | 40 | 1.1 | 620 | 95% | 53 |
| | 16 | 27 | 15 | 1.0 | 640 | 93% | 50 |
| | 17 | 32 | 39 | 0.8 | 640 | 96% | 54 |
| | 18 | 10 | 37 | 1.0 | 650 | 96% | 53 |
| Comparative Examples | 1 | 65 | 25 | 0.9 | 620 | 78% | 17 |
| | 2 | 74 | 29 | 1.0 | 620 | 73% | 12 |
| | 3 | 78 | 33 | 1.1 | 620 | 71% | 10 |

**TABLE 4**

| | | Composition of Low-Melting Point Aluminum Alloy Powder in Aluminum Powder Mixture (mass%) | | | | | | | | | Total Additive Element Content (mass%) | Ratio of Low-Melting Point Powder in Aluminum Powder Mixture | High-Melting Point Aluminum Alloy Powder (composition) |
|---|---|---|---|---|---|---|---|---|---|---|---|---|---|
| | | Al | Ca | Cu | Fe | Mg | Mn | Ni | Si | Zn | | | |
| Examples | 19 | Bal. | 0.0 | 6.0 | 0.7 | 0.0 | 0.0 | 0.0 | 0.0 | 0.3 | 7.0 | 10% | Al-3mass%Si |
| | 20 | Bal. | 0.0 | 6.0 | 0.7 | 0.0 | 0.0 | 0.0 | 0.0 | 0.3 | 7.0 | 20% | Al-3mass%Si |
| | 21 | Bal. | 0.0 | 6.0 | 0.7 | 0.0 | 0.0 | 0.0 | 0.0 | 0.3 | 7.0 | 30% | Al-3mass%Si |
| Comparative Example | 4 | Bal. | 0.0 | 25.0 | 0.5 | 0.0 | 0.0 | 0.0 | 0.0 | 0.3 | 25.8 | 20% | Al-3mass%Si |

**TABLE 5**

| | | Overall Composition of Aluminum Powder Mixture (mass%) | | | | | | | | | Total Additive Element Content | Oxygen Content |
|---|---|---|---|---|---|---|---|---|---|---|---|---|
| | | Al | Ca | Cu | Fe | Mg | Mn | Ni | Si | Zn | mass% | mass% |
| Examples | 19 | Bal. | 0.0 | 0.6 | 0.1 | 0.0 | 0.0 | 0.0 | 2.7 | 0.0 | 3.4 | 0.13 |
| | 20 | Bal. | 0.0 | 1.2 | 0.1 | 0.0 | 0.0 | 0.0 | 2.4 | 0.1 | 3.8 | 0.18 |
| | 21 | Bal. | 0.0 | 1.8 | 0.2 | 0.0 | 0.0 | 0.0 | 2.1 | 0.1 | 4.2 | 0.14 |
| Comparative Example | 4 | Bal. | 0.0 | 5.0 | 0.1 | 0.0 | 0.0 | 0.0 | 2.4 | 0.1 | 7.6 | 0.13 |

**TABLE 6**

| | | Melting Point Difference | Particle Size Distribution | (D90 - D10) /D50 | Sintering Conditions | Sintered Body Evaluation | Conductivity (% IACS) |
|---|---|---|---|---|---|---|---|
| | | | D50 | | Sintering Temperature (°C) | Relative Density | |
| Examples | 19 | 26 | 26 | 0.9 | 565 | 94% | 45 |
| | 20 | 26 | 31 | 1.1 | 565 | 95% | 45 |
| | 21 | 26 | 35 | 1.1 | 565 | 95% | 44 |
| Comparative Example | 4 | 27 | 37 | 1.0 | 565 | 73% | 10 |

The specimen of each of Examples 1 to 21 is an aluminum powder mixture obtained by mixing a pure aluminum powder (second powder) with an aluminum alloy powder (first powder) having a total content of alloy component set to be in a range of 0.3 to 5.0 mass%. In these specimens, the total content of the alloy elements is 0.3 to 5.0 mass% with respect to the total mass of the aluminum powder mixture as shown in Tables 2 and 6.

The specimens of Examples 1 to 21 exhibited a high relative density (89% to 97%) and a high conductivity (41% to 56% IACS) as shown in Tables 3 and 6.

In the specimens of Examples 1 to 21, the value of (D90 - D10)/D50 was 0.8 or more and less than 2.0 as shown in Tables 3 and 6.

In addition, the specimens of Examples 1 to 21 had an oxygen content of 0.30% or less, for example, 0.10% to 0.23% as shown in Tables 2 and 5.

The specimen of Comparative Example 1 had a small total additive element content and the specimen of Comparative Example 2 had a large total additive element content as shown in Table 1. However, the specimens had a low relative density and a low conductivity as shown in Table 3.

The specimen of Comparative Example 4 had a large total additive element content as shown in Tables 4 and 5, but had a low relative density and a low conductivity as shown in Table 6.

In the examples and comparative examples shown in Tables 2 and 5, there are specimens in which the total amount of Ca, Cu, Fe, Mg, Mn, Ni, Si, and Zn in the columns does not match the numerical value in the column of the total additive element content. The reason for this is due to the influence of impurity elements contained in each powder constituting the aluminum powder mixture. For example, the pure aluminum powder contains a certain amount of Fe, Si, and Mg as impurities. Due to the influence of the content of the impurities, the total amount of Ca, Cu, Fe, Mg, Mn, Ni, Si, and Zn in the columns does not completely match the total amount of the elements contained in the whole aluminum powder mixture, so that the values slightly differ due to the impurity contents. However, even in a case where these impurities are contained, the total content of one or more elements selected from Ca, Cu, Fe, Mg, Mn, Ni, Si, and Zn is preferably in the above-described range.

### INDUSTRIAL APPLICABILITY

According to an aluminum powder mixture of the present invention, it is possible to further promote the sintering between two or more powders having different melting points, and thus an aluminum sintered body can obtain a high density and high electrical conductive properties and thermal conductive properties. Therefore, for example, it is possible to further improve the performance of metal additive manufacturing products such as heat exchange members, conductive members, and strength members prepared by using the aluminum powder mixture. Accordingly, the present invention is industrially usable.

### REFERENCE SIGNS LIST

1: Green body
2: Heating furnace
3: Aluminum powder mixture
4: Pure aluminum powder (second powder)
5: first aluminum alloy powder (first powder)
6: Liquid phase
7: Sintered body
9: Product sintered body (additively manufactured product)
10: Second aluminum alloy powder

## Claims

1. An aluminum powder mixture obtained by mixing two or more powders containing aluminum,
wherein an oxygen content of the aluminum powder mixture is 0.3 mass% or less, and
a total content of one or more elements selected from Ca, Cu, Fe, Mg, Mn, Ni, Si, and Zn contained in the aluminum powder mixture is 0.4 mass% or more and 5.0 mass% or less.

2. The aluminum powder mixture according to Claim 1, wherein at least one of the powders constituting the aluminum powder mixture is a pure aluminum powder having a purity of 99% or more.

3. The aluminum powder mixture according to Claim 1 or 2, wherein at least one of the powders constituting the aluminum powder mixture is an aluminum alloy powder in which a total content of one or more elements selected from Ca, Cu, Fe, Mg, Mn, Ni, Si, and Zn as alloy components is 2.0 mass% or more and 25.0 mass% or less.

4. The aluminum powder mixture according to any one of Claims 1 to 3, wherein a difference MH - ML (°C) between a melting point ML (°C) of a pure aluminum powder or an aluminum alloy powder having a lowest melting point among the pure aluminum powders and the aluminum alloy powders constituting the aluminum powder mixture and a melting point MH (°C) of a pure aluminum powder or an aluminum alloy powder having a highest melting point is 10°C or more and 100°C or less.

5. The aluminum powder mixture according to any one of Claims 1 to 4, wherein a volume-based 50%-cumulative particle size measured by a laser diffraction/scattering method is 10 µm or more and 100 µm or less.

6. The aluminum powder mixture according to any one of Claims 1 to 5, wherein Y = (D90 - D10)/D50, that is calculated from a volume-based 10%-cumulative particle size (D10), a volume-based 50%-cumulative particle size (D50), and a volume-based 90%-cumulative particle size (D90), measured by a laser diffraction/scattering method, is in a range of 0.5 < Y < 2.0.

7. A metal powder for additive manufacturing comprising: the aluminum powder mixture according to any one of Claims 1 to 6.

8. A metal additive manufacturing product manufactured using the aluminum powder mixture according to any one of Claims 1 to 6 as a raw material.
